# EUROPEAN PATENT SPECIFICATION

(11) **EP 3 231 677 B1**
(45) Date of publication and mention of the grant of the patent: **06.05.2020**
(21) Application number: 17166631.6
(22) Date of filing: 13.04.2017
(51) Int. Cl.: B60T 8/24, B60T 11/224, B60T 15/46

(54) **DEVICE FOR CONTROLLING THE BRAKING OF VEHICLES**
BREMSSTEUERVORRICHTUNG FÜR KRAFTFAHRZEUG
SYSTEME DE CONTROLE DE FREINAGE DE VEHICULE

(30) Priority: 13.04.2016 IT UA20162574
(43) Date of publication of application: 18.10.2017
(73) Proprietor: SAFIM S.p.A., 41123 Modena (IT)
(72) Inventor: Mamei, Eronne, 41123 Modena (IT); Mamei, Enrico, 41123 Modena (IT); Mamei, Andrea, 41123 Modena (IT)
(74) Representative: Brunacci, Marco

(56) References cited:
- EP-A2- 1 283 140
- WO-A1-99/64284
- WO-A1-2006/070271
- WO-A1-2008/017726
- WO-A1-2012/046121
- WO-A1-2014/072776
- DE-A1-102015 108 981
- US-A1- 2004 004 394
- US-A1- 2016 052 498

## Description

The present invention relates to a device for controlling the braking of vehicles. As is known, to date towing vehicles are connected to their trailer by means of a connecting device which allows the respective braking systems to be put in communication with each other, in such a way that the braking of the towing vehicle operated by the operator also causes the braking of the towed trailer. The braking system of the trailer is therefore driven by the braking system of the tractor in order to synchronize the braking forces acting on them.

The recently introduced regulations enforced more severe braking performance than in the past both for trailers and for towing vehicles.

In particular, the decelerations to which the towing vehicles are subjected have increased and, consequently, also the pressures for driving the brakes. This has resulted in the fact that the one-piston master cylinders are not suited to achieve the required operating pressures.

To overcome this drawback, dual-stage master cylinders have been used, i.e. master cylinders provided with pistons having two different diameters. When the driver pushes the brake pedal, the larger diameter operates in the first part of the piston stroke, so as to cause the displacement of a large volume of oil to the brakes, to the detriment of a considerable effort required on the pedal, so as to move the brake jaws close to the respective friction surfaces, while in the second part of the stroke, which corresponds to the actual braking action, the portion of the piston with larger diameter is excluded and operates only the one with smaller diameter, thus requiring less effort and a more precise braking action.

The recently introduced regulations also enforced that the braking of the trailer is activated with a certain advance in time with respect to the one of the towing vehicle.

This advance in time is generally achieved by means of the use of valves, arranged along the supply line of the brakes of the towing vehicle, which prevent the work fluid from reaching the brakes themselves until a predefined pressure difference occurs at their extremities.

The use of these valves generally causes a back pressure which, by discharging onto the portion of the piston with a larger diameter, requires a greater effort to operate the brake pedal, which therefore seems "heaviest" to the user.

WO 2006/070271 A1, WO 99/64284 A1, US 2004/004394 A1, US 2016/052498 A1 disclose devices for controlling the braking of vehicles of the known type and comprising a pumping device of a work fluid which comprises a body wherein a seat is formed having at least a first stretch and a second stretch, the diameter of the first stretch being smaller than that of the second stretch. The first stretch has at least a port communicating with the braking system of a vehicle by means of a braking line, and the second stretch has at least a port which can be put into communication with the braking line. Inside the seat is slidably housed a piston, movable by a braking pedal of the vehicle, which defines a first chamber inside the first stretch and a second chamber inside the second stretch. The piston is movable between an idle position and at least a braking position.

The main aim of the present invention is to provide a device for controlling the braking of vehicles that allows to overcome the above mentioned drawbacks and, in particular, that allows to optimize the stroke of the piston having a larger diameter to deliver the largest possible amount of work fluid to the brakes of the vehicle, so as to fill up the relevant system and to minimize the effect of the back pressure acting on the piston.

Within this aim, one object of the present invention is to provide a device that is simple to make and safe to operate.

Another object of the present invention is to advance the activation of the braking system of the trailer with respect to that of the towing vehicle and, at the same time, to prevent undesirable residual pressures from occurring when the brake pedal is in the idle position.

Another object of the present invention is to provide a device for controlling the braking of vehicles that allows to overcome the aforementioned drawbacks of the prior art within a simple, rational, easy, effective to use and affordable solution.

The aforementioned objects are achieved by this device for controlling the braking of vehicles according to claim 1.

Other characteristics and advantages of the present invention will become more evident from the description of a preferred, but not exclusive, embodiment of a device for controlling the braking of vehicles, illustrated by way of an indicative yet non-limiting example, in the attached drawings wherein:
Figure 1 is a schematic representation of a device according to the invention in a first embodiment;
Figure 2 is a schematic representation of a device according to the invention in a second embodiment.

With particular reference to these illustrations, reference number 1 globally designates a device for controlling the braking of vehicles.

The device 1 comprises a pumping device 2, also called master cylinder, in turn comprising a body wherein is formed at least one seat 4 which has at least a first stretch 20 and at least a second stretch 21, where the first stretch 20 has a smaller diameter than the second stretch 21.

The first stretch 20 has at least a first port 6 for delivery, communicating with at least a first line 7 for braking connectable to the braking system of a vehicle, e.g. a towing vehicle, identified by letter F in the figures.

The device 1 also comprises at least a second line 12 for braking communicating with the first stretch 20 and connectable to at least one user point, e.g. of the type of a trailer-brake valve V.

In the embodiments shown in the figures, the first stretch 20 comprises at least a second port 13 for delivery, separate from the first port 6 and communicating with the second line 12 for braking.

The second stretch 21 has at least a supply port 5, connectable to a storage tank S of a work fluid, and at least a third port 22 for delivery, communicating with a third line 31 connected to the first line 7.

The first line 7, the second line 12, and the third line 31 are defined outside the seat 4.

Inside the seat 4 is slidably housed a piston 8, which defines at least a first chamber 4a inside the first stretch 20, communicating with the first and the second port 6, 13, and at least a second chamber 4b inside the second stretch 21, communicating with the third port 22.

The piston 8 is movable by the braking pedal P of the towing vehicle, in order to vary the volume of the chambers 4a and 4b, between an idle position, wherein the supply port 5 is in communication with the second chamber 4b, and at least a first braking position, wherein the supply port 5 is isolated from the second chamber 4b. As a result of the displacement from the idle position to the first braking position, the volume of the chambers 4a and 4b decreases and the piston 8 therefore delivers the pressurized work fluid along the lines 7, 12 and 31.

It follows therefore that, as a result of the displacement of the piston 8 from the idle position towards the first braking position, one part of the work fluid contained in the second chamber 4b is delivered to the braking system F through the third port 22, in such a way as to fill it and thus move the brake shoes close to the relevant friction surfaces.

Between the piston 8 and the seat 4 is also defined a drain chamber 9 which is in constant communication with the supply port 5 and, therefore, with the tank S. Between the drain chamber 9 and the second chamber 4b, a first sealing element 10 is provided which is associated with the piston 8 and adapted to prevent the work fluid from flowing from the supply port 5 to the second chamber itself.

According to the invention, the device 1 then comprises first valve means 11 located along the first line 7 and adapted to allow the work fluid to flow towards the braking system F as a result of the achievement of a predefined pressure difference at its extremities; the third line 31 is put in communication with the first line 7 downstream of the first valve means 11.

It cannot however be ruled out that the second line 12 can be connected to the first chamber 4a by means of the first line 7, upstream of the first valve means 11, i.e. branching out from the first line itself.

In the present description, the terms "upstream" and "downstream" used with reference to the first line 7 relate to the direction of forward movement of the work fluid from the first chamber 4a to the braking system F.

Advantageously, the first valve means 11 are defined inside the body of the pumping device 2.

More in detail, the first valve means 11 are of the type of a shutter which is housed inside a corresponding seat and is pushed to the closure position of the seat itself by a preloaded spring.

It follows therefore that the first and the second port 6 and 13 are in constant communication with the first chamber 4a and that the work fluid pressure along the first line 7, upstream of the first valve means 11, corresponds to the pressure along the second line 12.

Still according to the invention, the device 1 comprises second valve means 17 adapted to allow the return of the work fluid from the braking system F towards the first chamber 4a, along the first line 7, as a result of the return of the piston 8 from the first braking position towards the idle position, and third valve means 23 arranged along the third line 31 and adapted to prevent the return of the work fluid inside the second chamber 4b.

Advantageously, the seat 4 also has at least a by-pass port 14 communicating by means of a by-pass line 15 with the first line 7, downstream of the first valve means 11 and the device 1 comprises at least a control element 16 connected to the piston 8 and adapted to put the by-pass port 14 in communication with the first chamber 4a in the idle position of the piston itself and to isolate the by-pass port 14 from the first chamber 4a in the first braking position. It follows therefore that, when the piston 8 is in the idle position, the first line 7 for braking, downstream of the first valve means 11, is put in communication with the supply port 5, and hence with the tank S. This allows avoiding the presence of residual pressures when the pedal P has reached the idle position, by putting the braking system itself in communication with the tank S and by-passing the first valve means 11.

In the preferred embodiment the second valve means 17, of the type of a one-way valve, are defined by the control element 16.

More in detail, the control element 16 comprises at least a first thrust element 16a, adapted to interact with the piston 8, at least a second thrust element 16b, adapted to interact with the seat 4, and at least a first closure element 16c, interposed between the thrust elements 16a and 16b and movable relative thereto, which is adapted to open and close the by-pass port 14 in the idle position and in the first braking position of the piston 8, respectively.

Between the thrust elements 16a and 16b are suitably interposed first elastic means 18, which are adapted to keep the first thrust element 16a in support against the piston 8 and the second thrust element 16b in support against an abutment surface defined by the seat 4, while between the second thrust element 16b and the first closure element 16c are interposed second elastic means 19 adapted to push the first closure element itself towards the by-pass port 14. The second elastic means 19 and the first closure element 16c define the second valve means 17, since they allow opening the by-pass port 14 when the pressure in the first line 7 is higher than that in the first chamber 4a even if the piston 8 has not reached the idle position yet.

The first closure element 16c is hence kinematically connected to the piston 8, i.e. it is connected to its stroke and therefore changes its position inside the first chamber 4a depending on the position of the piston itself, and at the same time is movable relative thereto.

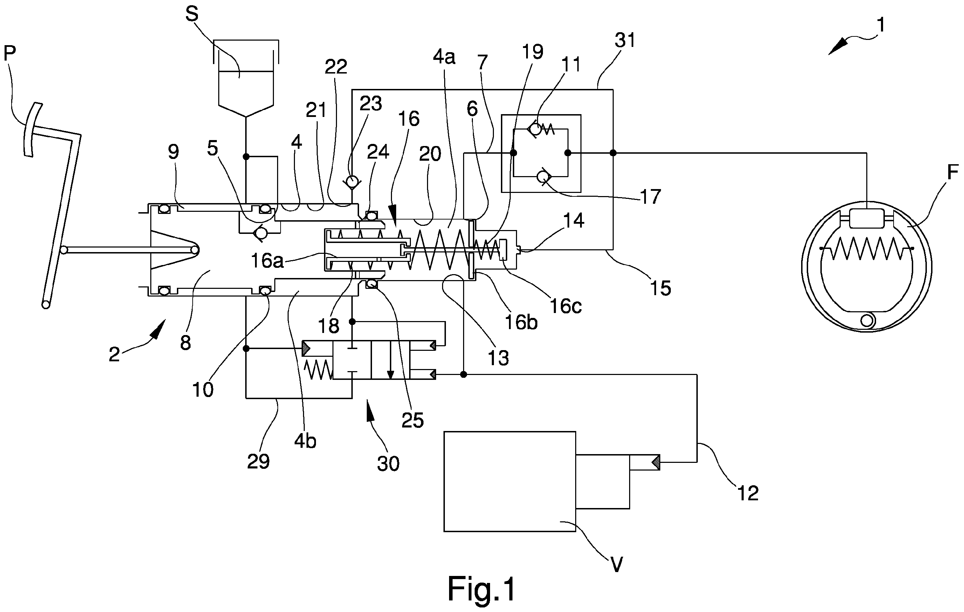

In the embodiment shown in Figure 1, the first closure element 16c has a first extremity which is adapted to operate in conjunction with the first thrust element 16a, which entrains the first closure element 16c away from the by-pass port 14 as a result of the displacement of the piston 8 towards the idle position, and a second extremity which is adapted to close the by-pass port 14 and on which the second elastic means 19 operate. More particularly, due to the displacement of the piston 8 towards the first braking position, the first thrust element 16a slides with respect to the first closure element 16c by pressing the first elastic means 18 and allowing the second elastic means 19 to push the first closure element itself towards the by-pass port 14 until its first extremity leans against the first thrust element 16a.

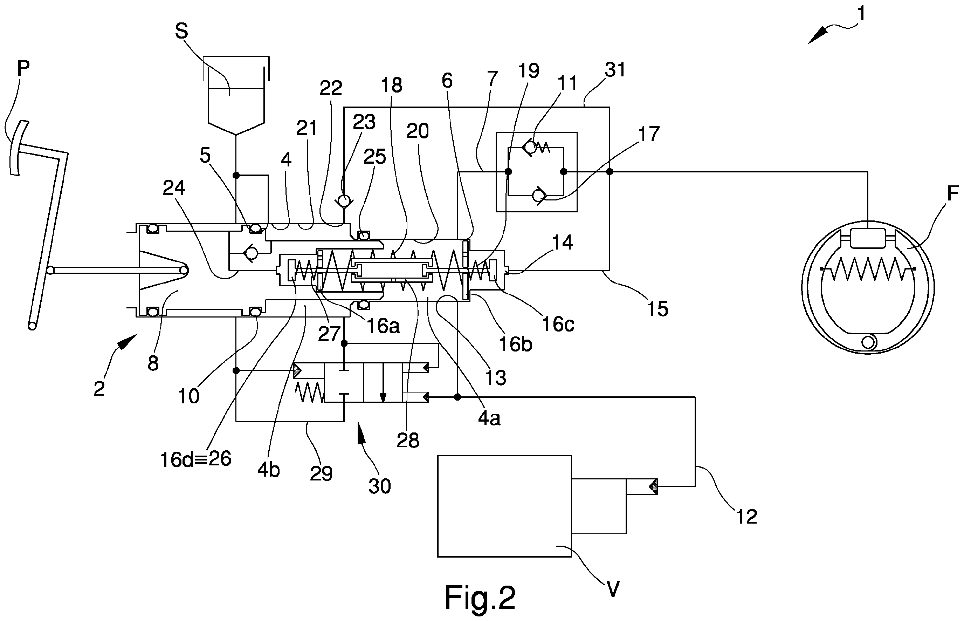

Advantageously, in the embodiments of Figures 1 and 2, at least a passage channel 24 is provided for the work fluid, which is adapted to put the first chamber 4a in communication with the supply port 5 (and hence with the tank S) when the piston 8 is in the idle position, and closure means are provided which are adapted to isolate the first chamber 4a from the supply port 5 when the piston 8 is in the first braking position. In the embodiments shown in the figures, the passage channel 24 is formed inside the piston 8.

In the embodiment of Figure 1, the closure means correspond to the first sealing element 10, which is adapted to isolate the supply port 5 from the second chamber 4b. In this embodiment, the passage channel 24 faces onto the lateral surface of the piston 8, downstream of the first sealing element 10 (i.e. beyond the first sealing element 10 with respect to the drain chamber 9), and a second sealing element 25 is provided, associated with the body of the pumping device 2 and arranged along the first stretch 20, which is adapted to interact with the piston itself to prevent the crossing of the passage channel 24 as a result of the achievement of a second work position (that is, arranged further on, taking into account the displacement of the piston 8 away from the idle position) subsequent to the first braking position. The supply port 5 and the passage channel 24 are therefore closed in sequence during the stroke of the piston 8 away from the idle position.

In the embodiment shown in Figure 2, on the other hand, the passage channel 24 faces on one side onto the drain chamber 9, and hence upstream of the first sealing element 10 and, on the other side, inside the first chamber 4a. In this embodiment, the closure means comprise, in addition to the first sealing element 10, also a shuttering element 26 arranged inside the first chamber 4a and adapted to isolate the passage channel 24 from the first chamber itself as a result of the achievement of the first braking position. Advantageously, the shuttering element 26 is defined by the control element 16.

More particularly, in this second embodiment, the control element 16 comprises, in addition to the first closure element 16c, on which operate the second elastic means 19 and which is adapted to close the by-pass port 14, also a second closure element 16d, which defines the shuttering element 26 and on which third elastic means 27 operate. The third elastic means 27 are interposed between the first thrust element 16a and the second closure element 16d and are adapted to push the latter towards the closure position of the passage channel 24. Suitably, the control element 16 comprises an interconnection element 28 of the closure elements 16c and 16d. More in detail, the closure elements 16c and 16d are associated movable with the interconnection element 28 and have a relative extremity adapted to interact with the interconnection element itself. Preferably, the device 1 also comprises at least a drain line 29 interposed between the second chamber 4b and the drain chamber 9, and comprises fourth valve means 30 located along the drain line itself. More particularly, the fourth valve means 30 are movable between a closed configuration and an open configuration wherein they prevent and permit the flow of the work fluid from the second chamber 4b towards the tank S, respectively. The fourth valve means 30 are adapted to switch from the closed configuration to the open configuration as a result of the achievement of a predefined pressure value inside said first and second chambers and resulting from the exceeding of the second braking position by the piston 8.

In the embodiments shown in Figures 1 and 2, the drain line 29 is defined outside the seat 4.

The operation of the present invention is as follows.

In the first embodiment shown in Figure 1, as a result of the pressure exerted on the pedal P, the piston 8 moves from the idle position to the first braking position, at which the first chamber 4a is isolated from the supply port 5.

In detail, in the first embodiment of Figure 1 when the piston 8 achieves the first braking position, the first sealing element 10 isolates the supply port 5 from the second chamber 4b and the first closure element 16c closes the by-pass port 14. The first and the second chamber 4a and 4b continue to be in communication with each other by means of the passage channel 24. During this phase, the displacement of the piston 8 causes therefore the delivery of the pressurized work fluid to the braking system F through the third port 22, to the trailer-brake valve V through the second port 13 and to the first valve means 11 through the first port 6. When the piston 8 reaches the second braking position, the second sealing element 25 prevents the work fluid from flowing through the passage channel 24 so that the first and the second chamber 4a and 4b are pressurized and isolated from each other.

In the embodiment of Figure 2, on the other hand, the first and the second chamber 4a and 4b are isolated from each other when the first braking position is reached, wherein the first sealing element 10 isolates the supply port 5 from the second chamber 4b, the second closure element 16d isolates the passage channel 24 from the first chamber 4a and the first closure element 16c isolates the by-pass line 15 from the first chamber 4a.

When the chambers 4a and 4b are isolated from each other, the displacement of the piston 8 causes the activation of the trailer-brake valve V and the filling of the stretch of the first line 7 to the braking system F.

Subsequently, once the pressure difference at the extremities reaches the calibration value, the first valve means 11 open and allow the braking system F to activate.

The further displacement of the piston 8 causes the opening of the fourth valve means 30, which were in the closed configuration so far, thus allowing the excess work fluid in the second chamber 4b to be discharged by opening the connection to the drain chamber 9 and hence to the tank S.

As for the first embodiment, also in this case the return of the piston 8 to the idle position puts the by-pass port 14 in communication with the supply port 5 and therefore the flow of the work fluid from the braking system F through the by-pass line 15.

In particular, in the first embodiment of Figure 1, the work fluid returning from the braking system F enters the first chamber 4a through the by-pass line 15, reaches the second chamber 4b by means of the passage channel 24, thus entering in communication with the supply port 5.

In the second embodiment of Figure 2, on the other hand, the work fluid returning from the braking system F enters the first chamber 4a through the by-pass line 15, crosses the passage channel 24 due to the opening of the second closure element 16d and reaches the drain chamber 9.

It has in practice been found that the described invention achieves the intended objects and in particular the fact is emphasized that the presence of the first and second valve means located along the first braking line allows delaying the activation of the brakes of the towing vehicle with respect to those of the trailer and the presence of the third valve means arranged along the third line allows, at the same time, not having any back pressure during the first part of the brake pedal stroke.

The device which the present invention relates to allows therefore optimizing the first part of the brake pedal stroke to deliver the largest possible amount of work fluid inside the braking system of the towing vehicle, by reducing the stress on the pedal to the minimum, and at the same time minimizing the negative effects of the back pressure due to the presence of the first valve means, which is discharged only on the second part of the piston stroke during which the smaller diameter operates.

## Claims

1. Device (1) for controlling the braking of vehicles, comprising:
- a pumping device (2) of a work fluid comprising a body wherein at least a seat (4) is formed having
▪ at least a first stretch (20) having at least a first port (6) for delivery, and at least a second port (13) for delivery separate from said first port (6);
▪ at least a second stretch (21) having at least a supply port (5), connectable to a work fluid storage tank (S), and at least a third port (22) for delivery; where said first stretch (20) has a smaller diameter than said second stretch (21);
where inside said seat (4) is slidably housed a piston (8), movable by the braking pedal (P) of the vehicle, adapted to define a first chamber (4a) inside said first stretch (20) communicating with said first and second ports (6, 13) and a second chamber (4b) inside said second stretch (21) communicating with said third port (22), said piston (8) being movable between an idle position, wherein said supply port (5) is communicating with said second chamber (4b) and at least a first braking position, wherein said second chamber (4b) is isolated from said supply port (5);
- a first line (7) for braking communicating with said first port (6) and connectable to the braking system (F) of a vehicle;
- a second line (12) for braking communicating with said second port (13) and connectable to a user point (V);
- a third line (31) communicating with said third port (22) and with said first line (7);
**characterized in that** it comprises first valve means (11) arranged along said first line (7) for braking to allow the flow of the work fluid towards the braking system (F) of the vehicle as a result of the achievement of a predefined pressure difference at its extremities, said third line (31) being in communication with said first line (7) downstream of the first valve means (11), second valve means (17) adapted to allow the return of the work fluid from said first line (7) for braking towards said first chamber (4a) during the displacement of said piston (8) from the first braking position towards the idle position, and third valve means (23) arranged along said third line (31) adapted to prevent the return of the work fluid inside said second chamber (4b).

2. Device (1) according to claim 1, **characterized in that** said seat (4) has at least a by-pass port (14) communicating by means of a by-pass line (15) with said first line (7) for braking, downstream of said first valve means (11), and **in that** it comprises at least a control element (16) connected to said piston (8) and adapted to put said by-pass port (14) in communication with said first chamber (4a) in the idle position, to connect said first line (7) for braking to said supply port (5), and to isolate said by-pass port (14) from said first chamber (4a) in the first braking position.

3. Device (1) according to claim 1 or 2, **characterized in that** said first line (7), said second line (12) and said third line (31) are defined externally to said seat (4).

4. Device (1) according to one or more of the preceding claims, **characterized in that** said first valve means (11) are defined inside said body.

5. Device (1) according to one or more of claims 2 to 4, **characterized in that** said second valve means (17) are defined by said control element (16).

6. Device (1) according to one or more of claims 2 to 5, **characterized in that** said control element (16) comprises at least a first thrust element (16a), adapted to interact with said piston (8), at least a second thrust element (16b), adapted to interact with said seat (4), and at least a first closure element (16c) interposed between said thrust elements (16a, 16b) and movable relative thereto, adapted to open and close said by-pass port (14) in the idle position and in the first braking position, respectively.

7. Device (1) according to claim 6, **characterized in that** it comprises first elastic means (18) interposed between said thrust elements (16a, 16b) to keep them in support against said piston (8) and against an abutment surface of said seat (4) respectively, and second elastic means (19) interposed between said second thrust element (16b) and said first closure element (16c) and adapted to push the latter towards said by-pass port (14), said second elastic means (19) and said first closure element (16c) defining said second valve means (17).

8. Device (1) according to one or more of the preceding claims, **characterized in that** it comprises at least a passage channel (24) of the work fluid adapted to put said first chamber (4a) in communication with said supply port (5) when said piston (8) is in the idle position, and **in that** it comprises closure means (10, 26) adapted to isolate said first chamber (4a) from said supply port (5) when said piston (8) is in the first braking position.

9. Device (1) according to claim 8, **characterized in that** said closure means comprise at least a first sealing element (10) associated with said piston (8) and adapted to isolate said supply port (5) from the second chamber (4b) in the first braking position and **in that** said passage channel (24) is formed on said piston (8) and faces onto the lateral surface of said piston (8) downstream of said first sealing element (10), at least a second sealing element (25) being provided arranged along said first stretch (20) and adapted to interact with said piston (8) to prevent the crossing of said passage channel (24), so as to isolate said first chamber (4a) from said second chamber (4b), as a result of the achievement of a second braking position subsequent to said first braking position.

10. Device (1) according to claim 8, **characterized in that** said closure means comprise at least a first sealing element (10) associated with said piston (8) and adapted to isolate said supply port (5) from the second chamber (4b) in the first braking position, **in that** said passage channel (24) is formed on said piston (8) and faces, on one side, onto a drain chamber (9) communicating with said supply port (5), defined between said piston (8) and said seat (4) and arranged upstream of said first sealing element (10), and on the other side onto said first chamber (4a), and **in that** said closure means comprise a shuttering element (26) adapted to isolate said passage channel (24) from said first chamber (4a) as a result of the achievement of said first braking position.

11. Device (1) according to claim 10, **characterized in that** said control element (16) comprises a second closure element (16d), which defines said shuttering element (26), on which operate third elastic means (27), interposed between said first thrust element (16a) and the second closure element itself, adapted to push the latter towards the closure position of said passage channel (24), said control element (16) comprising a mutual interconnection element (28) of said closure elements (16c, 16d).

12. Device (1) according to one or more of the preceding claims, **characterized in that** it comprises at least a drain line (29), interposed between said second chamber (4b) and a drain chamber (9) communicating with said supply port (5), and **in that** it comprises fourth valve means (30) arranged along said drain line (29) and movable between a closed configuration and an open configuration wherein they prevent and permit, respectively, the flow of the work fluid from the second chamber (4b) towards said drain chamber (9), said fourth valve means (30) being adapted to switch from the closed configuration to the open configuration as a result of the achievement of a predefined pressure value inside said first and second chambers (4a, 4b).

## Patentansprüche

1. Vorrichtung (1) zur Steuerung der Bremsung von Fahrzeugen, umfassend:
- eine Pumpvorrichtung (2) für ein Arbeitsfluid mit einem Körper, in dem mindestens ein Sitz (4) ausgebildet ist, der
- mindestens einen ersten Abschnitt (20) aufweisend mindestens einen ersten Anschluss (6) zum Liefern und mindestens einen zweiten Anschluss (13) zum Liefern, der von dem ersten Anschluss (6) getrennt ist;
- mindestens einen zweiten Abschnitt (21) mit mindestens einem Versorgungsanschluss (5), der mit einem Arbeitsfluid-Speichertank (S) verbindbar ist, und mindestens einen dritten Anschluss (22) zum Liefern; wobei der erste Abschnitt (20) einen kleineren Durchmesser als der zweite Abschnitt (21) hat;
wobei im Inneren des Sitzes (4) ein Kolben (8) gleitend untergebracht ist, der durch das Bremspedal (P) des Fahrzeugs beweglich ist und so angepasst ist, dass er eine erste Kammer (4a) im Inneren des ersten Abschnitts (20), die mit dem ersten und zweiten Anschluss (6, 13) in Verbindung steht, und eine zweite Kammer (4b) im Inneren des zweiten Abschnitts (21), die mit dem dritten Anschluss (22) in Verbindung steht, definiert, wobei der Kolben (8) zwischen einer Ruhestellung, in der die Versorgungsöffnung (5) mit der zweiten Kammer (4b) in Verbindung steht, und mindestens einer ersten Bremsstellung, in der die zweite Kammer (4b) von dem Versorgungsanschluss (5) isoliert ist, beweglich ist;
- eine erste Leitung (7) zum Bremsen, die mit dem ersten Anschluss (6) in Verbindung steht und an das Bremssystem (F) eines Fahrzeugs angeschlossen werden kann;
- eine zweite Leitung (12) zum Bremsen, die mit dem zweiten Anschluss (13) kommuniziert und mit einem Benutzerpunkt (V) verbunden werden kann;
- eine dritte Leitung (31), die mit dem dritten Anschluss (22) und mit der ersten Leitung (7) kommuniziert;
**dadurch gekennzeichnet, dass** sie ein erstes Ventilmittel (11) umfasst, das entlang der ersten Leitung (7) zum Bremsen angeordnet ist, um den Fluss des Arbeitsfluids zum Bremssystem (F) des Fahrzeugs als Ergebnis des Erreichens einer vordefinierten Druckdifferenz an seinen Enden zu ermöglichen, wobei die dritte Leitung (31) mit der ersten Leitung (7) stromabwärts des ersten Ventilmittels (11) in Verbindung steht, ein zweites Ventilmittel (17), das geeignet ist, den Rückfluss des Arbeitsfluids aus der ersten Bremsleitung (7) in Richtung der ersten Kammer (4a) während der Verschiebung des Kolbens (8) aus der ersten Bremsposition in die Ruhestellung zu ermöglichen, und ein drittes Ventilmittel (23), das entlang der dritten Leitung (31) angeordnet ist und geeignet ist, den Rückfluss des Arbeitsfluids innerhalb der zweiten Kammer (4b) zu verhindern.

2. Vorrichtung (1) nach Anspruch 1, **dadurch gekennzeichnet, dass** der Sitz (4) mindestens einen Umgehungsanschluss (14) aufweist, der mittels einer Umgehungsleitung (15) mit der ersten Leitung (7) zum Bremsen stromabwärts des ersten Ventilmittels (11) in Verbindung steht, und dass sie mindestens ein Steuerelement (16) umfasst, das mit dem Kolben (8) verbunden ist und geeignet ist, den Umgehungsanschluss (14) in der Ruhestellung mit der ersten Kammer (4a) in Verbindung zu bringen, die erste Leitung (7) zum Bremsen mit dem Versorgungsanschluss (5) zu verbinden und den Umgehungsanschluss (14) in der ersten Bremsstellung von der ersten Kammer (4a) zu isolieren.

3. Vorrichtung (1) nach Anspruch 1 oder 2, **dadurch gekennzeichnet, dass** die erste Leitung (7), die zweite Leitung (12) und die dritte Leitung (31) außerhalb des Sitzes (4) definiert sind.

4. Vorrichtung (1) nach einem oder mehreren der vorstehenden Ansprüche, **dadurch gekennzeichnet, dass** das erste Ventilmittel (11) im Inneren des Körpers definiert ist.

5. Vorrichtung (1) nach einem oder mehreren der Ansprüche 2 bis 4, **dadurch gekennzeichnet, dass** das zweite Ventilmittel (17) durch das Steuerelement (16) definiert ist.

6. Vorrichtung (1) nach einem oder mehreren der Ansprüche 2 bis 5, **dadurch gekennzeichnet, dass** das Steuerelement (16) mindestens ein erstes Schubelement (16a), das mit dem Kolben (8) zusammenwirken kann, mindestens ein zweites Schubelement (16b), das mit dem Sitz (4) zusammenwirken kann, und mindestens ein erstes Verschlusselement (16c) umfasst, das zwischen den Schubelementen (16a, 16b) angeordnet und relativ zu diesen beweglich ist und den Umgehungsanschluss (14) in der Ruhestellung bzw. in der ersten Bremsstellung öffnen und schließen kann.

7. Vorrichtung (1) nach Anspruch 6, **dadurch gekennzeichnet, dass** sie ein erstes elastisches Mittel (18) umfasst, das zwischen den Schubelementen (16a, 16b) angeordnet ist, um sie in Abstützung gegen den Kolben (8) bzw. gegen eine Anschlagfläche des Sitzes (4) zu halten, und ein zweites elastisches Mittel (19), das zwischen dem zweiten Druckelement (16b) und dem ersten Verschlusselement (16c) angeordnet ist und geeignet ist, letzteres in Richtung des Umgehungsanschlusses (14) zu drücken, wobei das zweite elastische Mittel (19) und das erste Verschlusselement (16c) das zweite Ventilmittel (17) definieren.

8. Vorrichtung (1) nach einem oder mehreren der vorstehenden Ansprüche, **dadurch gekennzeichnet, dass** sie mindestens einen Durchlasskanal (24) für das Arbeitsfluid aufweist, der geeignet ist, die erste Kammer (4a) mit dem Versorgungsanschluss (5) in Verbindung zu bringen, wenn sich der Kolben (8) in der Ruhestellung befindet, und dass sie Verschlussmittel (10, 26) aufweist, die geeignet sind, die erste Kammer (4a) von dem Versorgungsanschluss (5) zu isolieren, wenn sich der Kolben (8) in der ersten Bremsstellung befindet.

9. Vorrichtung (1) nach Anspruch 8, **dadurch gekennzeichnet, dass** die Verschlussmittel mindestens ein erstes Dichtungselement (10) umfassen, das dem Kolben (8) zugeordnet ist und geeignet ist, die Versorgungsöffnung (5) von der zweiten Kammer (4b) in der ersten Bremsposition zu isolieren, und dass der Durchlasskanal (24) auf dem Kolben (8) ausgebildet ist und auf die Seitenfläche des Kolbens (8) stromabwärts des ersten Dichtungselements (10) gerichtet ist, mindestens ein zweites Dichtungselement (25) vorgesehen ist, das entlang des ersten Abschnitts (20) angeordnet ist und dazu geeignet ist, mit dem Kolben (8) zusammenzuwirken, um das Kreuzen des Durchlasskanals (24) zu verhindern, um so die erste Kammer (4a) von der zweiten Kammer (4b) zu isolieren, als Ergebnis des Erreichens einer zweiten Bremsposition nach der ersten Bremsposition.

10. Vorrichtung (1) nach Anspruch 8, **dadurch gekennzeichnet, dass** die Verschlussmittel mindestens ein erstes Dichtungselement (10) umfassen, das dem Kolben (8) zugeordnet ist und geeignet ist, in der ersten Bremsposition den Versorgungsanschluss (5) von der zweiten Kammer (4b) zu isolieren, dass der Durchlasskanal (24) auf dem Kolben (8) ausgebildet ist und auf einer Seite auf eine Abflusskammer (9) gerichtet ist, die mit dem Versorgungsanschluss (5) in Verbindung steht, der zwischen dem Kolben (8) und dem Sitz (4) definiert und stromaufwärts des ersten Dichtungselements (10) und auf der anderen Seite auf der ersten Kammer (4a) angeordnet ist, und dass die Verschlussmittel ein Verschlusselement (26) umfassen, das geeignet ist, den Durchlasskanal (24) von der ersten Kammer (4a) infolge des Erreichens der ersten Bremsposition zu isolieren.

11. Vorrichtung (1) nach Anspruch 10, **dadurch gekennzeichnet, dass** das Steuerelement (16) ein zweites Verschlusselement (16d) umfasst, das das Verschlusselement (26) definiert, auf das dritte elastische Mittel (27) wirken, die zwischen dem ersten Schubelement (16a) und dem zweiten Verschlusselement selbst angeordnet sind und geeignet sind, das letztere in Richtung der Verschlussposition des Durchlasskanals (24) zu drücken, wobei das Steuerelement (16) ein gegenseitiges Verbindungselement (28) der Verschlusselemente (16c, 16d) umfasst.

12. Vorrichtung (1) nach einem oder mehreren der vorstehenden Ansprüche, **dadurch gekennzeichnet, dass** sie mindestens eine Abflussleitung (29) umfasst, die zwischen der zweiten Kammer (4b) und einer Abflusskammer (9) angeordnet ist, die mit dem Versorgungsanschluss (5) in Verbindung steht, und dass sie ein viertes Ventilmittel (30) umfasst, das entlang der Abflussleitung (29) angeordnet ist und zwischen einer geschlossenen Konfiguration und einer offenen Konfiguration beweglich ist, in der es jeweils die Strömung des Arbeitsfluids aus der zweiten Kammer (4b) in Richtung auf die Abflusskammer (9) verhindert und zulässt, wobei das vierte Ventilmittel (30) so angepasst ist, dass es von der geschlossenen Konfiguration in die offene Konfiguration als Ergebnis des Erreichens eines vordefinierten Druckwertes innerhalb der ersten und zweiten Kammer (4a, 4b) schaltet.

## Revendications

1. Dispositif (1) de commande du freinage de véhicules, comprenant :
- un dispositif de pompage (2) d'un fluide de travail comprenant un corps dans lequel au moins un siège (4) est formé ayant
-- au moins un premier tronçon (20) ayant au moins un premier orifice (6) de refoulement, et au moins un deuxième orifice (13) de refoulement, séparé dudit premier orifice (6) ;
-- au moins un deuxième tronçon (21) ayant au moins un orifice d'alimentation (5), pouvant être relié à un réservoir de stockage de fluide de travail (S), et au moins un troisième orifice (22) de refoulement ;
où ledit premier tronçon (20) a un diamètre inférieur à celui dudit deuxième tronçon (21) ;
où à l'intérieur dudit siège (4) un piston (8) est logé de manière coulissante, mobile par la pédale de freinage (P) du véhicule, adapté pour définir une première chambre (4a) à l'intérieur dudit premier tronçon (20) communiquant avec lesdits premier et deuxième orifices (6, 13) et une deuxième chambre (4b) à l'intérieur dudit deuxième tronçon (21) communiquant avec ledit troisième orifice (22), ledit piston (8) étant mobile entre une position de de repos, dans laquelle ledit orifice d'alimentation (5) communique avec ladite deuxième chambre (4b) et au moins une première position de freinage, dans laquelle ladite deuxième chambre (4b) est isolée dudit orifice d'alimentation (5) ;
- une première ligne (7) de freinage communiquant avec ledit premier orifice (6) et pouvant être reliée au système de freinage (F) d'un véhicule ;
- une deuxième ligne (12) de freinage communiquant avec ledit deuxième orifice (13) et pouvant être reliée à un point d'utilisateur (V) ;
- une troisième ligne (31) communiquant avec ledit troisième orifice (22) et avec ladite première ligne (7) ;
**caractérisé en ce qu'**il comprend des premiers moyens de soupape (11) agencés le long de ladite première ligne (7) de freinage pour permettre l'écoulement du fluide de travail vers le système de freinage (F) du véhicule à la suite de l'atteinte d'une différence de pression prédéfinie à ses extrémités, ladite troisième ligne (31) étant en communication avec ladite première ligne (7) en aval des premiers moyens de soupape (11), des deuxièmes moyens de soupape (17) adaptés pour permettre le retour du fluide de travail de ladite première ligne (7) de freinage vers ladite première chambre (4a) pendant le déplacement dudit piston (8) de la première position de freinage vers la position de repos, et des troisièmes moyens de soupape (23) agencés le long de ladite troisième ligne (31) adaptés pour empêcher le retour du fluide de travail à l'intérieur de ladite deuxième chambre (4b).

2. Dispositif (1) selon la revendication 1, **caractérisé en ce que** ledit siège (4) a au moins un orifice de dérivation (14) communiquant au moyen d'une ligne de dérivation (15) avec ladite première ligne (7) de freinage, en aval desdits premiers moyens de soupape (11), et **en ce qu'**il comprend au moins un élément de commande (16) relié audit piston (8) et adapté pour mettre ledit orifice de dérivation (14) en communication avec ladite première chambre (4a) dans la position de repos, pour relier ladite première ligne (7) de freinage audit orifice d'alimentation (5), et pour isoler ledit orifice de dérivation (14) de ladite première chambre (4a) dans la première position de freinage.

3. Dispositif (1) selon la revendication 1 ou 2, **caractérisé en ce que** ladite première ligne (7), ladite deuxième ligne (12) et ladite troisième ligne (31) sont définies extérieurement audit siège (4).

4. Dispositif (1) selon une ou plusieurs des revendications précédentes, **caractérisé en ce que** lesdits premiers moyens de soupape (11) sont définis à l'intérieur dudit corps.

5. Dispositif (1) selon une ou plusieurs des revendications 2 à 4, **caractérisé en ce que** lesdits deuxièmes moyens de soupape (17) sont définis par ledit élément de commande (16).

6. Dispositif (1) selon une ou plusieurs des revendications 2 à 5, **caractérisé en ce que** ledit élément de commande (16) comprend au moins un premier élément de poussée (16a), adapté pour interagir avec ledit piston (8), au moins un deuxième élément de poussée (16b), adapté pour interagir avec ledit siège (4), et au moins un premier élément de fermeture (16c) interposé entre lesdits éléments de poussée (16a, 16b) et mobile par rapport à ceux-ci, adapté pour ouvrir et fermer ledit orifice de dérivation (14) dans la position de repos et dans la première position de freinage, respectivement.

7. Dispositif (1) selon la revendication 6, **caractérisé en ce qu'**il comprend des premiers moyens élastiques (18) interposés entre lesdits éléments de poussée (16a, 16b) pour les maintenir en appui contre ledit piston (8) et contre une surface de butée dudit siège (4) respectivement, et des deuxièmes moyens élastiques (19) interposés entre ledit deuxième élément de poussée (16b) et ledit premier élément de fermeture (16c) et adaptés pour pousser ce dernier vers ledit orifice de dérivation (14), lesdits deuxièmes moyens élastiques (19) et ledit premier élément de fermeture (16c) définissant lesdits deuxièmes moyens de soupape (17).

8. Dispositif (1) selon une ou plusieurs des revendications précédentes, **caractérisé en ce qu'**il comprend au moins un canal de passage (24) du fluide de travail adapté pour mettre ladite première chambre (4a) en communication avec ledit orifice d'alimentation (5) lorsque ledit piston (8) est dans la position de repos, et **en ce qu'**il comprend des moyens de fermeture (10, 26) adaptés pour isoler ladite première chambre (4a) dudit orifice d'alimentation (5) lorsque ledit piston (8) est dans la première position de freinage.

9. Dispositif (1) selon la revendication 8, **caractérisé en ce que** lesdits moyens de fermeture comprennent au moins un premier élément d'étanchéité (10) associé audit piston (8) et adapté pour isoler ledit orifice d'alimentation (5) de la deuxième chambre (4b) dans la première position de freinage et **en ce que** ledit canal de passage (24) est formé sur ledit piston (8) et fait face à la surface latérale dudit piston (8) en aval dudit premier élément d'étanchéité (10), au moins un deuxième l'élément d'étanchéité (25) étant agencé le long dudit premier tronçon (20) et adapté pour interagir avec ledit piston (8) afin d'empêcher le franchissement dudit canal de passage (24), de manière à isoler ladite première chambre (4a) de ladite deuxième chambre (4b), suite à l'atteinte d'une deuxième position de freinage postérieure à ladite première position de freinage.

10. Dispositif (1) selon la revendication 8, **caractérisé en ce que** lesdits moyens de fermeture comprennent au moins un premier élément d'étanchéité (10) associé audit piston (8) et adapté pour isoler ledit orifice d'alimentation (5) de la deuxième chambre (4b) dans la première position de freinage, **en ce que** ledit canal de passage (24) est formé sur ledit piston (8) et fait face, d'un côté, à une chambre de vidange (9) communiquant avec ledit orifice d'alimentation (5), définie entre ledit piston (8) et ledit siège (4) et agencée en amont dudit premier élément d'étanchéité (10), et de l'autre côté à ladite première chambre (4a), et **en ce que** lesdits moyens de fermeture comprennent un élément d'obturation (26) adapté pour isoler ledit canal de passage (24) de ladite première chambre (4a) à la suite de l'atteinte de ladite première position de freinage.

11. Dispositif (1) selon la revendication 10, **caractérisé en ce que** ledit élément de commande (16) comprend un deuxième élément de fermeture (16d), qui définit ledit élément d'obturation (26), sur lequel fonctionnent des troisièmes moyens élastiques (27), interposés entre ledit premier élément de poussée (16a) et le deuxième élément de fermeture lui-même, adaptés pour pousser ce dernier vers la position de fermeture dudit canal de passage (24), ledit élément de commande (16) comprenant un élément d'interconnexion mutuelle (28) desdits éléments de fermeture (16c, 16d).

12. Dispositif (1) selon une ou plusieurs des revendications précédentes, **caractérisé en ce qu'**il comprend au moins une ligne de vidange (29), interposée entre ladite deuxième chambre (4b) et une chambre de vidange (9) communiquant avec ledit orifice d'alimentation (5), et **en ce qu'**il comprend des quatrièmes moyens de soupape (30) agencés le long de ladite ligne de vidange (29) et mobiles entre une configuration fermée et une configuration ouverte dans lesquelles ils empêchent et permettent, respectivement, l'écoulement du fluide de travail de la deuxième chambre (4b) vers ladite chambre de vidange (9), lesdits quatrièmes moyens de soupape (30) étant adaptés pour passer de la configuration fermée à la configuration ouverte à la suite de l'atteinte d'une valeur de pression prédéfinie à l'intérieur desdites première et deuxième chambres (4a, 4b).
